# FASCICULE DE BREVET EUROPEEN

(11) **EP 3 978 369 B1**
(45) Date de publication et mention de la délivrance du brevet: **23.11.2022**
(21) Numéro de dépôt: 21197938.0
(22) Date de dépôt: 21.09.2021
(51) Int. Cl.: B64D 27/26, B64D 27/12

(54) **ASSEMBLAGE D'UN MAT AVEC UNE AILE D'UN AERONEF**
ZUSAMMENBAU EINER AUFHÄNGUNG UND EINES FLÜGELS EINES LUFTFAHRZEUGS
ASSEMBLY OF A MAST WITH AN AIRCRAFT WING

(30) Priorité: 02.10.2020 FR 2010077
(43) Date de publication de la demande: 06.04.2022
(73) Titulaire: AIRBUS OPERATIONS (S.A.S.), 31060 Toulouse (FR)
(72) Inventeur: BERJOT, Michael, 31060 TOULOUSE Cedex 9 (FR); GUENEAU, Germain, 31060 TOULOUSE Cedex 9 (FR); ROBIGLIO, Thomas, 31060 TOULOUSE Cedex 9 (FR)
(74) Mandataire: Gicquel, Olivier Yves Gérard

(56) Documents cités:
- WO-A1-2007/012667
- FR-A1- 2 915 178
- US-A- 6 095 456
- US-A1- 2011 127 371

## Description

La présente invention concerne un assemblage d'un mât avec une aile d'aéronef.

De manière classique, un aéronef comprend au moins un turboréacteur fixé sous chacune de ses ailes au moyen d'un mât constitué d'une structure primaire sous la forme d'un caisson rigide. Le mât est attaché de manière isostatique sous l'aile au moyen d'organes de fixation du mât à l'aile. Les organes de fixation sont constitués d'un système avant de fixation disposé globalement à mi-longueur de la structure primaire, un système arrière de fixation disposé à l'arrière de la structure primaire, et un système intermédiaire de fixation disposé entre les systèmes de fixation avant et arrière.

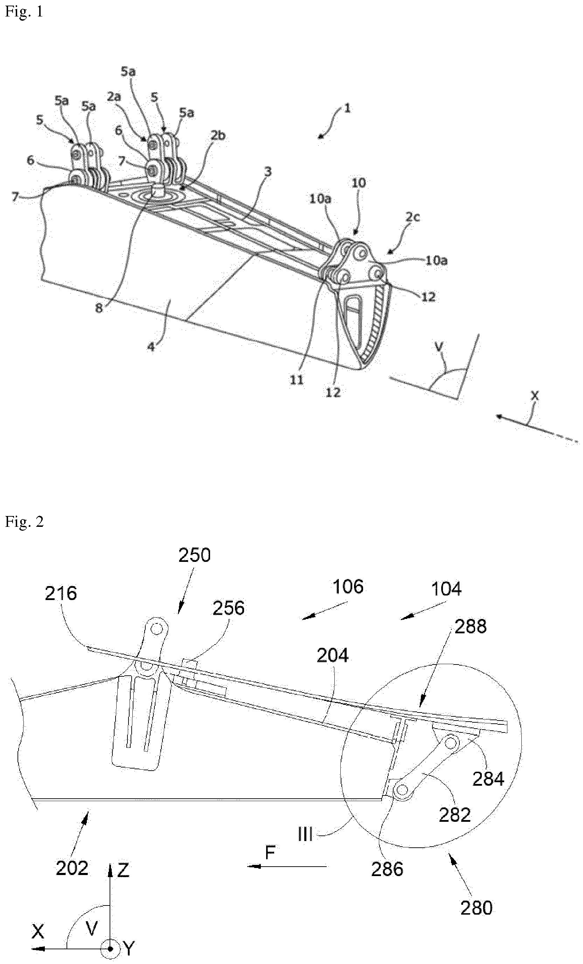

En référence avec la Fig. 1, le système avant de fixation 2a, situé sur le longeron supérieur 3 du mât 1, comprend deux paires de bielles deux-points 5, réparties de chaque côté d'un plan médian longitudinal V de la structure primaire 4 séparant cette dernière en deux parties gauche et droite. Chaque bielle deux-points 5a s'étend parallèlement à l'axe longitudinal X du mât 1 et les deux bielles 5a d'une paire de bielles 5 sont, d'une part, reçues entre les branches d'une chape de fixation 6 à trois branches solidaires de la structure primaire 4 et montées articulées à ladite chape via un axe 7 orienté perpendiculairement au plan médian longitudinal V, et d'autre part destinées à être articulées à l'aile (non représentée).

Le système de fixation intermédiaire 2b, situé sur le longeron supérieur 3 du mât 1 comprend un pion 8 de type spigot, qui s'étend dans le plan médian longitudinal V et est destiné à être inséré dans un alésage prévu à cet effet dans l'aile.

Le système arrière de fixation 2c, également situé sur le longeron supérieur 3 du mât 1 comprend deux paires de bielles trois-points 10, dites bielles triangles. Chaque bielle triangle 10a a sensiblement la forme d'un triangle isocèle avec un alésage traversant au niveau de chaque angle. Chaque bielle triangle 10 s'étend perpendiculairement au plan médian longitudinal V. De chaque côté de ce plan, et de manière symétrique par rapport à ce dernier, les deux paires de bielles triangles 10 prennent en sandwich une patte de fixation 11 solidaire de la structure primaire 4 et sont articulées à cette dernière par une liaison de type chape avec un axe 12 orienté longitudinalement. Chaque bielle triangle 10a est en outre destinée à être articulée en un point à l'aile.

Cette configuration donne satisfaction mais implique une distance importante, entre l'aile et le longeron supérieur pour pouvoir intégrer le système arrière de fixation. La forme spécifique des bielles triangles ne permet pas de réduire davantage cette distance.

Il existe un besoin de trouver un design de système arrière de fixation qui soit plus compact afin de réduire l'encombrement de l'assemblage du mât à l'aile.

Un objet de la présente invention est de répondre en tout ou partie à ce besoin. A cet effet, l'invention concerne un assemblage d'un mât avec une aile d'aéronef, tel que revendiqué à la revendication 1. Le brevet FR2915178 décrit le préambule de la revendication 1.

Avec un tel assemblage, l'encombrement du système arrière de fixation est réduit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 déjà décrite, est une vue en perspective de l'arrière d'un mât d'aéronef avec des organes de fixation du mât à une aile d'aéronef, selon l'état de l'art,
- la figure 2 est une vue de côté d'un assemblage d'un mât avec une aile d'aéronef au moyen d'organes de fixation du mât à une aile comprenant un système arrière de fixation selon un mode de réalisation de l'invention,
- la figure 3 est une vue en perspective de la zone III de la Fig. 2 montrant en détail le système arrière de fixation selon le mode de réalisation de l'invention,
- la figure 4 est une vue éclatée et en perspective du système arrière de fixation représenté à la Fig. 3, selon le mode de réalisation de l'invention.

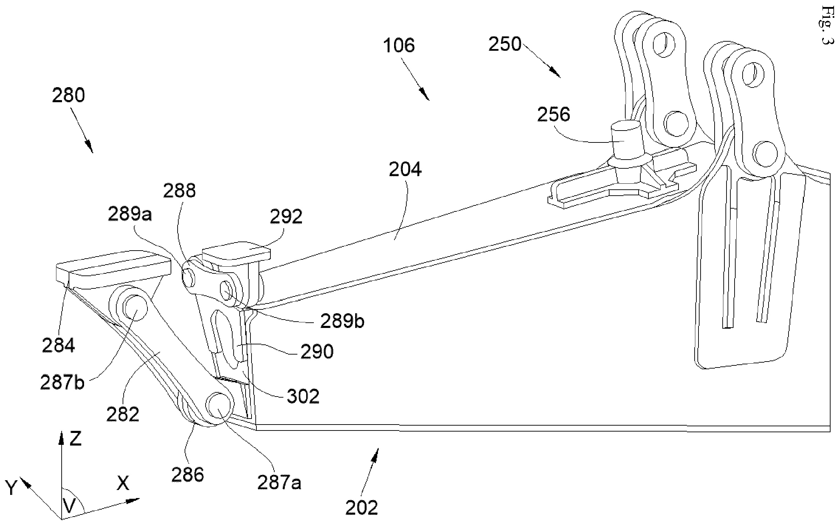

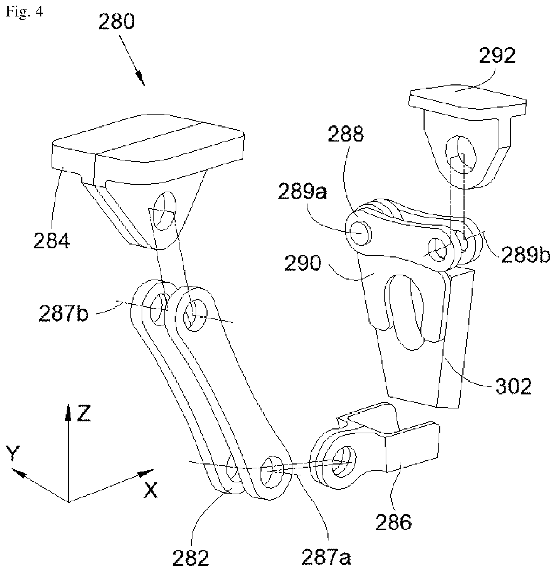

En référence avec les Figures 2 à 4, un assemblage d'un mât 106 avec une aile 104 d'un aéronef est réalisé au moyen d'organes de fixation. Le mât 106 est fixé de manière isostatique sous l'aile 104 et est destiné à supporter un turboréacteur (non représenté) fixé sous le mât 106. L'aile 104 est matérialisée ici par son panneau d'intrados 216 fixé à une structure de l'aile 104.

Dans la description, les termes relatifs à une position sont pris en référence par rapport à la flèche F représentant la direction d'avancement de l'aile /mât dans l'air sous l'effet de la poussée fournie par le turboréacteur.

De manière connue, le mât 106 comprend une structure primaire 202 sous forme d'un caisson rigide qui s'étend d'avant en arrière en longueur selon un axe longitudinal X, parallèle à la direction d'avancement F de l'aéronef.

On appelle plan médian longitudinal V, le plan parallèle à l'axe longitudinal X, orthogonal au sol (c'est-à-dire à l'horizontale) et qui divise la structure primaire 202 en deux parties gauche et droite.

La structure primaire 202 comprend un longeron supérieur 204 qui forme la face supérieure du caisson et qui est arrangé en regard de l'aile 104 sous laquelle est monté le mât 106. Une nervure 302 (visible en transparence à la Fig. 2), située à l'extrémité arrière du caisson, s'étend perpendiculairement au plan médian longitudinal V et ferme le caisson pour former la face arrière de ce dernier.

Les organes de fixation comprennent classiquement un système avant de fixation 250 du mât 106 à l'aile 104 arrangé sur la face supérieure de la structure primaire 202 globalement à mi-longueur de cette dernière, un système arrière de fixation 280 du mât 106 à l'aile 104 disposé à l'arrière de la structure primaire, et un système intermédiaire de fixation 256 du mât 106 à l'aile 104 disposé sur la face supérieure entre le système avant de fixation 250 et le système arrière de fixation 280.

Dans le mode de réalisation illustré à la Fig. 2, le système avant de fixation 250 et le système intermédiaire de fixation 256 sont de conceptions identiques à ceux de l'art antérieur tels que décrits plus haut en relation avec la Fig. 1 et ne seront pas décrits plus avant. Le système avant de fixation 250 est prévu pour reprendre les efforts verticaux (dans le plan médian longitudinal V et perpendiculairement à l'axe longitudinal X), tandis que le système de fixation intermédiaire 256 est prévu pour reprendre les efforts transversaux (perpendiculaires au plan médian longitudinal V) et longitudinaux.

Selon l'invention, le système arrière de fixation 280 comprend une paire de manilles verticales 282 montées articulées entre la face arrière de la structure primaire 202, et plus particulièrement une première ferrure 286, et un premier sabot 284 fixé à l'aile 104 et plus particulièrement ici au panneau d'intrados 216.

La fixation de la paire de manilles verticales 282 à la structure primaire 202 est assurée ici par la première ferrure 286 qui est fixée à la structure primaire 202 au niveau de la nervure arrière 302, c'est-à-dire de la face arrière.

Chaque manille de la paire de manilles verticales 282 peut être doublée.

Les manilles de la paire de manilles verticales 282 prennent en sandwich la première ferrure 286, d'une part, et le premier sabot 284, d'autre part. La fixation des manilles à la structure primaire 202 est assurée par une liaison de type chape avec un axe 287a-b orienté transversalement par rapport au mât 106 et traversant la paire de manille verticales 282 et la première ferrure 286 ou le premier sabot 284. Les manilles de la paire de manilles verticales 282 sont orientées quasiment verticalement.

La fixation du premier sabot 284 au panneau d'intrados 216 est réalisée par exemple par soudure ou par mise en place d'éléments de visserie.

De la même manière, la fixation de la première ferrure 286 à la face arrière de la structure primaire 202 est réalisée par exemple par soudure ou par mise en place d'éléments de visserie.

La paire de manilles verticales 282 permet une reprise des efforts principalement en Z.

Le système arrière de fixation 280 comporte également une paire de manilles transversales 288 montées articulées entre la face arrière de la structure primaire 202, et plus particulièrement une deuxième ferrure 290, et un deuxième sabot 292 fixé à l'aile 104 et plus particulièrement ici au panneau d'intrados 216.

La fixation de la paire de manilles transversales 288 à la structure primaire 202 est assurée ici par la deuxième ferrure 290 qui est fixée à la structure primaire 202 au niveau de la nervure arrière 302, c'est-à-dire de la face arrière.

Chaque manille de la paire de manilles transversales 288 peut être doublée.

Les manilles de la paire de manilles transversales 288 prennent en sandwich la deuxième ferrure 290, d'une part, et le deuxième sabot 292, d'autre part. La fixation des manilles à la structure primaire 202 est assurée par une liaison de type chape avec un axe 289a-b orienté longitudinalement et traversant la paire de manilles transversales 288 et la deuxième ferrure 290 ou le deuxième sabot 292. Les manilles de la paire de manilles transversales 288 sont orientées quasiment horizontalement et transversalement par rapport à la direction longitudinale X.

La fixation du deuxième sabot 292 au panneau d'intrados 216 est réalisée par exemple par soudure ou par mise en place d'éléments de visserie.

De la même manière, la fixation de la deuxième ferrure 290 à la structure primaire 202 est réalisée par exemple par soudure ou par mise en place d'éléments de visserie.

La paire de manilles transversales 288 permet une reprise des efforts principalement en Y. En outre, la position de la paire de manilles transversales 288 au plus près de l'aile 104 permet de réduire l'introduction de moments secondaires dans l'assemblage.

Le mât 106 est alors au plus près de l'aile 104 du fait de la hauteur réduite à l'arrière du mât 106. En outre, la largeur du mât 106 à l'arrière est réduite par rapport à l'état de la technique, et l'inclinaison des panneaux latéraux du mât 106 est accentuée permettant une meilleure performance aérodynamique.

## Revendications

1. Assemblage d'un mât (106) et d'une aile (104) d'un aéronef, le mât (106) comportant :
- une structure primaire (202) s'étendant d'avant en arrière selon un axe longitudinal et ayant la forme d'un caisson avec une face arrière et un longeron supérieur (204) formant une face supérieure du caisson, un plan médian longitudinal (V) séparant la structure primaire (202) en deux parties gauche-droite, l'assemblage comprenant un système avant de fixation (250) du mât (106) à l'aile (104) arrangé sur la face supérieure du caisson à mi-longueur de la structure primaire (202), un système arrière de fixation (280) du mât (106) à l'aile (104) arrangé à l'arrière de la structure primaire (202), et un système intermédiaire de fixation (256) du mât (106) à l'aile (104) arrangé sur la face supérieure du caisson entre les systèmes de fixation avant et arrière, **caractérisé en ce que** le système arrière de fixation (280) comprend :
- une paire de manilles verticales (282) montées articulées entre la face arrière de la structure primaire (202) et un premier sabot (284) fixé à l'aile (104), où la fixation des manilles à la structure primaire (202) est assurée par une liaison de type chape avec un axe (287a-b) orienté transversalement par rapport au mât (106), et
- une paire de manilles transversales (288) montées articulées entre la face arrière de la structure primaire (202) et un deuxième sabot (292) fixé à l'aile (104), où la fixation des manilles à la structure primaire (202) est assurée par une liaison de type chape avec un axe (289a-b) orienté longitudinalement par rapport au mât (106).

2. Assemblage selon la revendication 1, **caractérisé en ce que** la fixation des manilles de la paire de manilles verticales (282) à la face arrière est assurée par une première ferrure (286) fixée à la face arrière et prise en sandwich entre les manilles de la paire de manilles verticales (282).

3. Assemblage selon l'une des revendications 1 ou 2, **caractérisé en ce que** la fixation des manilles de la paire de manilles transversales (288) à la face arrière est assurée par une deuxième ferrure (290) fixée à la face arrière et prise en sandwich entre les manilles de la paire de manilles transversales (288).

## Patentansprüche

1. Zusammenbau eines Trägers (106) und eines Flügels (104) eines Luftfahrzeugs, wobei der Träger (106) Folgendes aufweist:
- eine Primärstruktur (202), die sich entlang einer Längsachse von vorne nach hinten erstreckt und die Form eines Kastens mit einer Rückfläche und einem oberen Längsträger (204) hat, der eine obere Fläche des Kastens bildet, wobei eine Längsmittelebene (V) die Primärstruktur (202) in zwei Teile links und rechts teilt, wobei der Zusammenbau ein vorderes, an der oberen Fläche des Kastens auf halber Länge der Primärstruktur (202) angeordnetes System (250) zur Befestigung des Trägers (106) an dem Flügel (104), ein hinteres, an der Rückseite der Primärstruktur (202) angeordnetes System (280) zur Befestigung des Trägers (106) an dem Flügel (104) und ein dazwischenliegendes System (256) zur Befestigung des Trägers (106) an dem Flügel (104) umfasst, das an der oberen Fläche des Kastens zwischen dem vorderen und dem hinteren Befestigungssystem angeordnet ist, **dadurch gekennzeichnet, dass** das hintere Befestigungssystem (280) Folgendes umfasst:
- ein Paar vertikale Schäkel (282), die gelenkig zwischen der Rückfläche der Primärstruktur (202) und einem an dem Flügel (104) befestigten ersten Schuh (284) montiert sind, wobei die Befestigung der Schäkel an der Primärstruktur (202) durch eine gabelartige Verbindung mit einem Bolzen (287a-b) erfolgt, der quer bezüglich des Trägers (106) ausgerichtet ist, und
- ein Paar Querschäkel (288), die gelenkig zwischen der Rückfläche der Primärstruktur (202) und einem an dem Flügel (104) befestigten zweiten Schuh (292) montiert sind, wobei die Befestigung der Schäkel an der Primärstruktur (202) durch eine gabelartige Verbindung mit einem Bolzen (289a-b) erfolgt, der in Längsrichtung bezüglich des Trägers (106) ausgerichtet ist.

2. Zusammenbau nach Anspruch 1, **dadurch gekennzeichnet, dass** die Befestigung der Schäkel des Paars vertikaler Schäkel (282) an der Rückfläche durch einen ersten Beschlag (286) erfolgt, der an der Rückfläche befestigt und zwischen den Schäkeln des Paars vertikaler Schäkel (282) eingeklemmt ist.

3. Zusammenbau nach einem der Ansprüche 1 oder 2, **dadurch gekennzeichnet, dass** die Befestigung der Schäkel des Paars Querschäkel (288) an der Rückfläche durch einen zweiten Beschlag (290) erfolgt, der an der Rückfläche befestigt und zwischen den Schäkeln des Paars Querschäkel (288) eingeklemmt ist.

## Claims

1. Assembly of a pylon (106) and of a wing (104) of an aircraft, the pylon (106) comprising:
- a primary structure (202) that extends from front to rear along a longitudinal axis and that is in the form of a box with a rear face and an upper spar (204) forming an upper face of the box, a longitudinal median plane (V) separating the primary structure (202) into two parts, left and right, the assembly comprising a front fastening system (250) for fastening the pylon (106) to the wing (104), which system is arranged on the upper face of the box halfway along the primary structure (202), a rear fastening system (280) for fastening the pylon (106) to the wing (104), which system is arranged at the rear of the primary structure (202), and an intermediate fastening system (256) for fastening the pylon (106) to the wing (104), which system is arranged on the upper face of the box between the front and rear fastening systems, **characterized in that** the rear fastening system (280) comprises:
- a pair of vertical shackles (282) mounted so as to be articulated between the rear face of the primary structure (202) and a first shoe (284) fastened to the wing (104), wherein the shackles are fastened to the primary structure (202) by a clevis-type connection with a pin (287a-b) oriented transversely with respect to the pylon (106), and
- a pair of transverse shackles (288) mounted so as to be articulated between the rear face of the primary structure (202) and a second shoe (292) fastened to the wing (104), wherein the shackles are fastened to the primary structure (202) by a clevis-type connection with a pin (289a-b) oriented longitudinally with respect to the pylon (106).

2. Assembly according to Claim 1, **characterized in that** the shackles of the pair of vertical shackles (282) are fastened to the rear face by a first fitting (286) fastened to the rear face and sandwiched between the shackles of the pair of vertical shackles (282).

3. Assembly according to either of Claims 1 and 2, **characterized in that** the shackles of the pair of transverse shackles (288) are fastened to the rear face by a second fitting (290) fastened to the rear face and sandwiched between the shackles of the pair of transverse shackles (288).
